# EUROPÄISCHE PATENTSCHRIFT

(11) **EP 3 432 451 B1**
(45) Veröffentlichungstag und Bekanntmachung des Hinweises auf die Patenterteilung: **21.07.2021**
(21) Anmeldenummer: 17182603.5
(22) Anmeldetag: 21.07.2017
(51) Int. Cl.: H02K 3/30, H02K 3/34, H02K 15/10

(54) **SPULE MIT DECKBAND AUS HOCHLEISTUNGSMATERIAL**
COIL WITH COVERING STRIP MADE FROM HIGH PERFORMANCE MATERIAL
BOBINE AYANT UNE BANDE DE RECOUVREMENT EN MATÉRIAU HAUTE PERFORMANCE

(43) Veröffentlichungstag der Anmeldung: 23.01.2019
(73) Patentinhaber: Siemens Mobility GmbH, 81739 München (DE)
(72) Erfinder: Schemmel, Florian, 90455 Nürnberg (DE)

(56) Entgegenhaltungen:
- CA-A1- 2 319 281
- CH-A5- 559 451
- JP-A- H0 888 948
- JP-A- H02 156 605
- US-A- 3 254 150

## Beschreibung

Die vorliegende Erfindung geht aus von einer Spule einer Statorwicklung einer elektrischen Maschine,
- wobei die Spule aus einer Anzahl von Windungen besteht, die gemeinsam mit einer Anzahl von Schichten eines Glimmerbandes bewickelt sind, auf die wiederum eine Anzahl von Schichten eines Deckbandes gewickelt ist,
- wobei das Deckband eine Abfolge von zwei Schichten aufweist, wobei je eine dieser beiden Schichten ein Gewebe und eine Folie ist.

Die vorliegende Erfindung geht weiterhin aus von einer elektrischen Maschine, wobei die elektrische Maschine einen Stator und einen Rotor aufweist, wobei der Stator Statornuten aufweist, in die eine Statorwicklung eingebracht ist, wobei die Statorwicklung Spulen aufweist, wobei mindestens eine der Spulen als Spule wie obenstehend beschrieben ausgebildet ist.

Die vorliegende Erfindung geht weiterhin aus von einem elektrischen Antrieb, wobei der Antrieb eine derartige elektrische Maschine, einen Umrichter und eine Steuereinrichtung für den Umrichter aufweist, wobei die elektrische Maschine von der Steuereinrichtung über den Umrichter an eine Versorgungsspannung anschaltbar ist, die größer als 1 kV ist, insbesondere größer als 1,5 kV, beispielsweise bis zu 4,5 kV.

Die vorliegende Erfindung geht weiterhin aus von einem Schienenfahrzeug, wobei das Schienenfahrzeug als Traktionsantrieb einen derartigen elektrischen Antrieb aufweist.

Bei elektrischen Maschinen werden auf die Spulen der Statorwicklung zur Hauptisolation eine oder mehrere Lagen an Glimmerband aufgebracht. Dies erfolgt unter anderem, um die Nässeresistenz und die Wärmeklasse der Spule zu steigern. Insbesondere bei elektrischen Maschinen, die als Traktionsantrieb von Schienenfahrzeugen verwendet werden, wird dieser Aufbau zusätzlich durch eine Lage eines Gewebe-Deckbandes vor mechanischen Einflüssen geschützt. Das Gewebe-Deckband weist ausschließlich eine mechanische Schutzfunktion auf. Die Nässeresistenz und die Wärmeklasse der Hauptisolierung werden hingegen maßgeblich durch die Anzahl an Lagen an Glimmerband bestimmt. Wenn eine bestimmte Anzahl an Lagen des Glimmerbandes die erforderlichen Eigenschaften nicht aufweist, wird die Anzahl an Lagen des Glimmerbandes erhöht. Alternativ zu einer Erhöhung der Anzahl an Lagen von Glimmerband ist es weiterhin bekannt, zwischen die Lagen an Glimmerband zusätzlich isolierende Folienbänder einzulegen. Die Folienbänder bestehen in manchen Fällen aus einem Polyimid. Bei den Folienbändern handelt es sich um reine Folien ohne Verstärkung durch ein Gewebe.

In beiden Fällen - also sowohl bei der Erhöhung der Anzahl an Lagen an Glimmerband als auch bei der Verwendung von Folienbändern zwischen den Lagen an Glimmerband - erhöht sich der Fertigungsaufwand und erhöhen sich die Material- und Herstellungskosten.

Bei normalen elektrischen Antrieben, die nicht zu Traktionszwecken verwendet werden, ist es weiterhin bekannt, auf die Lagen an Glimmerband zusätzlich eine Lage eines kombinierten Folie-Gewebe-Deckbandes aufzubringen. Sowohl die Folie als auch das Gewebe bestehen aus PET (Polyethylenterephthalat). Mit derartigen Folie-Gewebe-Deckbändern lässt sich eine Wärmeklasse von maximal 180°C erreichen.

Aus dem Dokument US 3 254 150 A sind elektrische Spulen für ein Kühlaggregat bekannt, welche eine flexible elektrische Isolierung in Form eines Glimmerbands aufweisen. Aus dem Dokument JP H02 156605 A ist bekannt, eine Spule zunächst mit einem Isoliermaterial zu umwickeln, welches nachfolgend mit einem weiteren Isoliermaterial mit einem geringen Reibungsfaktor umwickelt wird. Das Dokument CH 559 451 A5 offenbart eine windungsisolierte Spule für eine elektrische Maschine mit einem um die Leiter gewickelten, sich teilweise überlappenden, tränkbaren Isoliermaterial. In dem Dokument JP H08 88948 A werden ein Band bestehend aus einem Polyesterfilm und einem Aramidvlies um eine Spulenisolierung aus Glimmerband gewickelt, wobei das Vlies außen ist, und nachfolgend ein Koronaentladungen verhinderndes Band um das Band gewickelt. Schließlich offenbart das Dokument CA 2 319 281 A1 ein Isoliersystem für eine dynamoelektrische Maschine, bei welchem zwei Isolierschichten um elektrische Leiter gewickelt werden, wobei die erste Schicht eine erste Permittivität aufweist, welche größer als die Permittivität der zweiten Schicht ist.

Die Aufgabe der vorliegenden Erfindung besteht darin, Möglichkeiten zur Verfügung zu stellen, mittels derer auf einfache und kostengünstige Weise Spulen, elektrische Maschinen und Antriebe geschaffen werden können, die insbesondere für eine Verwendung bei Traktionsantrieben geeignet sind.

Die Aufgabe wird durch eine Spule mit den Merkmalen des Anspruchs 1 gelöst.

Erfindungsgemäß wird eine Spule der eingangs genannten Art dadurch ausgestaltet, dass das Gewebe aus einer Glasfaser oder aus einem ersten Hochleistungspolymer besteht und die Folie aus einem zweiten Hochleistungspolymer besteht.

In der Regel ist bevorzugt, dass das Gewebe aus einer Glasfaser besteht. Falls das Gewebe aus dem ersten Hochleistungspolymer besteht, ist das erste Hochleistungspolymer erfindungsgemäß ein Aramid. Das zweite Hochleistungspolymer ist hingegen erfindungsgemäß ein Polyimid.

Erfindungsgemäß ist das Gewebe von den Schichten des Glimmerbandes abgewandt und hiermit korrespondierend die Folie den Schichten des Glimmerbandes zugewandt.

Erfindungsgemäß ist die Spule als dreidimensionale Formspule ausgebildet.

Im Falle einer dreidimensionalen Formspule ist es prinzipiell möglich, die Schichten (oder Lagen) an Glimmerband nach dem Formgebungsprozess der Spule aufzubringen. Aus fertigungstechnischen Gründen ist es jedoch erheblich einfacher, wenn die Spule zunächst als plane Spule gewickelt wird, dann mit den Schichten des Glimmerbandes und den Schichten des Deckbandes bewickelt wird und erst danach zur dreidimensionalen Formspule geformt wird. Erfindungsgemäß weisen die Schichten des Glimmerbandes untereinander und die Schichten des Deckbandes untereinander Verschiebungen gegeneinander auf, wie sie durch einen derartigen Prozess (also eine Formgebung nach dem Bewickeln mit den Schichten an Glimmerband und Deckband) entstehen.

Die Aufgabe wird weiterhin durch eine elektrische Maschine mit den Merkmalen des Anspruchs 2 gelöst. Erfindungsgemäß ist bei einer elektrischen Maschine der eingangs genannten Art mindestens eine der Spulen erfindungsgemäß ausgebildet.

Die Aufgabe wird weiterhin durch einen elektrischen Antrieb mit den Merkmalen des Anspruchs 3 gelöst. Erfindungsgemäß ist die elektrische Maschine des elektrischen Antriebs erfindungsgemäß ausgebildet.

Die Aufgabe wird weiterhin durch ein Schienenfahrzeug mit den Merkmalen des Anspruchs 4 gelöst. Erfindungsgemäß weist das Schienenfahrzeug als Traktionsantrieb einen erfindungsgemäßen elektrischen Antrieb auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Schienenfahrzeug,
- FIG 2: einen elektrischen Antrieb
- FIG 3: eine elektrische Maschine,
- FIG 4: einen Stator einer elektrischen Maschine und eine Spule,
- FIG 5: einen Querschnitt durch eine Spule,
- FIG 6: eine Abfolge von Schichten von Bändern,
- FIG 7: eine Draufsicht auf eine Oberseite eines Deckbandes,
- FIG 8: eine Draufsicht auf eine Unterseite eines Deckbandes,
- FIG 9: ein Ablaufdiagramm und
- FIG 10: eine plane Spule.

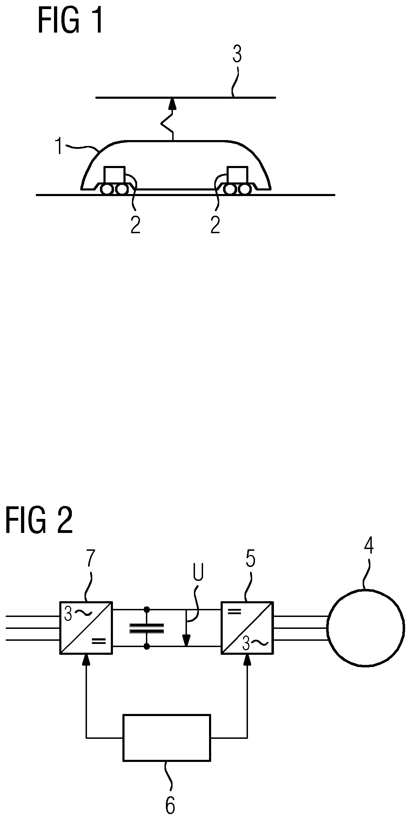

Gemäß FIG 1 weist ein Schienenfahrzeug 1 (beispielsweise eine Elektrolok) mindestens einen Traktionsantrieb 2 auf. Der Traktionsantrieb 2 wird gemäß FIG 1 über eine Oberleitung 3 mit elektrischer Energie versorgt. Es ist jedoch auch eine andere Art der Versorgung denkbar, beispielsweise über einen Dieselantrieb, der einen elektrischen Generator antreibt.

Der Traktionsantrieb 2 ist ein Beispiel eines elektrischen Antriebs. In Verbindung mit dem Traktionsantrieb 2 wird die vorliegende Erfindung nachstehend erläutert. Der elektrische Antrieb könnte jedoch auch für andere Zwecke verwendet werden. Nachstehend werden daher nur allgemein die Bezeichnung "Antrieb" verwendet und weiterhin das Bezugszeichen 2 verwendet.

Der elektrische Antrieb 2 weist gemäß FIG 2 eine elektrische Maschine 4, einen Umrichter 5 und eine Steuereinrichtung 6 für den Umrichter 5 auf. In vielen Fällen ist dem Umrichter 5 weiterhin ein Gleichrichter 7 vorgeordnet. Dies ist jedoch nicht zwingend erforderlich. Von der Steuereinrichtung 6 ist die elektrische Maschine 4 über den Umrichter 5 an eine Versorgungsspannung U anschaltbar. Falls der Gleichrichter 7 vorhanden ist und steuerbar ist, erfolgt die Steuerung des Gleichrichters 7 in der Regel ebenfalls durch die Steuereinrichtung 6.

Die Versorgungsspannung U - also diejenige Spannung, welche an die Motorklemmen der elektrischen Maschine 4 angelegt wird - ist oftmals größer als 1 kV. Sie kann sogar größer als 1,5 kV sein, beispielsweise zwischen 2 kV und 3 kV liegen. In manchen Fällen kann sie bis zu 4,5 kV betragen.

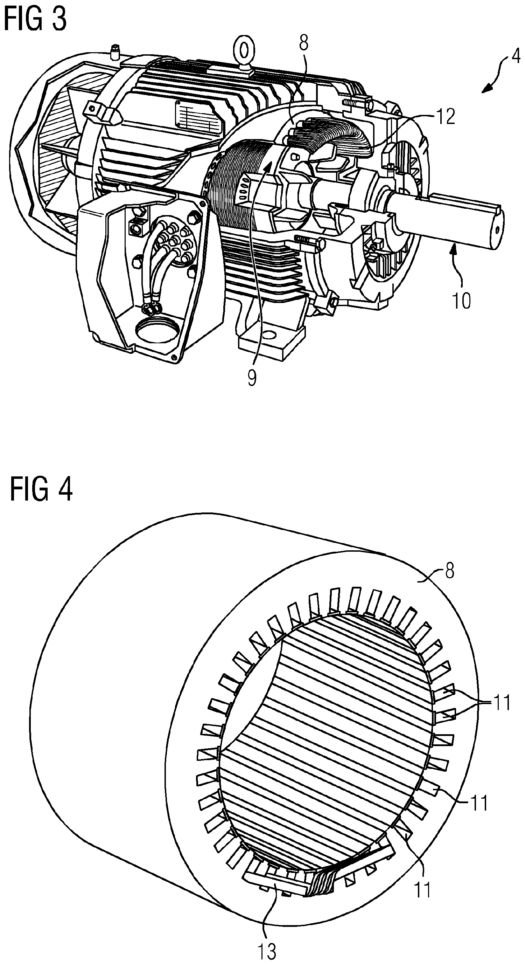

Die elektrische Maschine weist gemäß FIG 3 einen Stator 8 und einen Rotor 9 auf. Der Rotor 9 ist auf einer Rotorwelle 10 drehfest angeordnet, die ihrerseits um eine Rotationsachse rotierbar ist. Der Stator 8 weist gemäß den FIG 3 und 4 Statornuten 11 auf. In die Statornuten 11 ist eine Statorwicklung 12 (siehe FIG 3) eingebracht. Die Statorwicklung 12 weist Spulen 13 (siehe FIG 4) auf, wobei in FIG 4 der Übersichtlichkeit halber nur eine der Spulen 13 dargestellt ist. Die Ausgestaltung der Spule 13 ist der eigentliche Gegenstand der vorliegenden Erfindung.

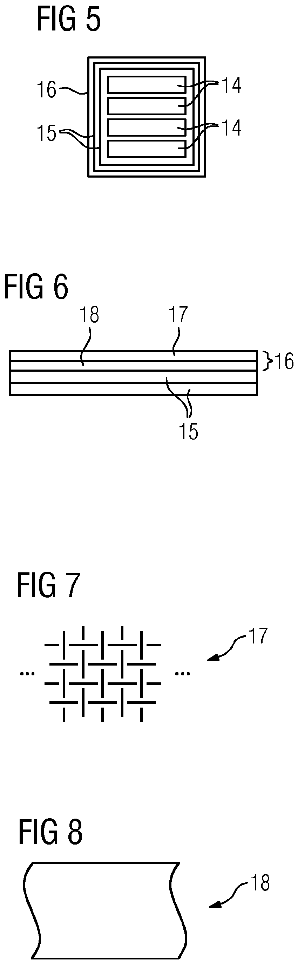

Die Spule 13 besteht gemäß FIG 5 aus einer Anzahl von Windungen 14. Die Windungen 14 bestehen üblicherweise aus Kupfer. In jedem Fall aber sind die Windungen 14 mit einer nicht eigens dargestellten elektrischen Isolierung versehen, beispielsweise einem Schutzlack. Die Anzahl an Windungen 14 kann nach Bedarf sein. Die in FIG 5 dargestellte Anzahl von vier Windungen 14 ist rein beispielhaft.

Die Windungen 14 sind gemäß FIG 5 - und zwar nicht einzeln, sondern gemeinsam - mit einer Anzahl von Schichten eines Glimmerbandes 15 bewickelt. Die Anzahl an Schichten des Glimmerbandes 15 kann 1 sein. Oftmals ist sie größer als 1. Die in FIG 5 dargestellte Anzahl von zwei Schichten ist jedoch rein beispielhaft. Auf die Schichten an Glimmerband 15 - genau genommen auf die äußerste Schicht an Glimmerband 15 - ist eine Anzahl von Schichten eines Deckbandes 16 gewickelt. Die Anzahl an Schichten des Deckbandes 16 kann größer als 1 sein. In der Regel ist jedoch nur eine Schicht an Deckband 16 gewickelt. Das Deckband 16 ist in der Regel die äußerste Schicht der fertigen Spule 13. Nach dem Bewickeln der Spule 13 mit dem Deckband 16 wird also die fertige Spule 13 in den Stator 9 bzw. genauer in zwei der Statornuten 11 eingesetzt.

Im Falle der Ausgestaltung der Spule 13 als Formspule sollte das Glimmerband 15 eine möglichst hohe Biegsamkeit und einen möglichst geringen Haftreibungskoeffizienten zwischen Oberseite und Unterseite aufweisen. Insbesondere sollte die Biegesteifigkeit nach IEC EN ISO 8295 (Stand 2004) unter 50 N/m liegen. Der Haftreibungskoeffizient (definiert in derselben Norm) sollte unter 0,7 liegen. Beispiele geeigneter Glimmerbänder sind RikaFibrel E364N und RikaFibrel E464N der Nippon Rika Group.

Das Deckband 16 ist gemäß den FIG 6 bis 8 als Laminat ausgebildet, das eine Abfolge von zwei Schichten 17, 18 aufweist. Je eine dieser beiden Schichten 17, 18 ist ein Gewebe 17 und eine Folie 18. Weitere Bestandteile enthält das Deckband 16 nicht. Die Folie 18 grenzt also unmittelbar an das Gewebe 17 an. Das Gewebe 17 ist von den Schichten des Glimmerbandes 15 abgewandt und hiermit korrespondierend die Folie 18 den Schichten des Glimmerbandes 15 zugewandt.

Das Gewebe 17 besteht vorzugsweise aus einer Glasfaser. Alternativ kann es aus einem ersten Hochleistungspolymer bestehen. Das erste Hochleistungspolymer ist ein Aramid, insbesondere ein meta(m)-Aramid oder ein para(p)-Aramid. Die Folie 18 besteht aus einem zweiten Hochleistungspolymer. Das zweite Hochleistungspolymer ist ein Polyimid. Ein Beispiel eines geeigneten Deckbandes 16 ist Voltaflex GK2797 der Isovolta AG.

Es ist möglich, dass die Spule 13 eine im Wesentlichen flache Spule ist. Oftmals ist die Spule 13 jedoch, wie in FIG 4 erkennbar ist, als dreidimensionale Formspule ausgebildet.

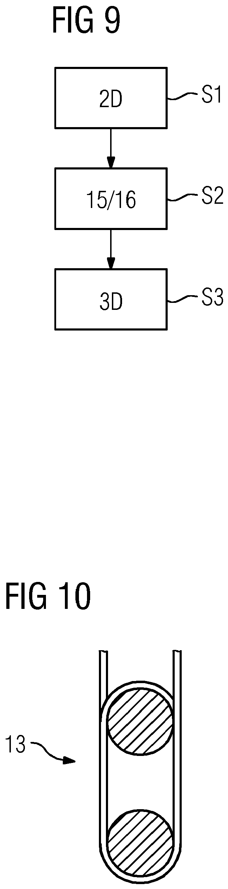

Im Falle der Ausbildung als Formspule ist es möglich, die Schichten des Glimmerbandes 15 und die Schichten des Deckbandes 16 nach dem Formen der Spule 13 zur Formspule aufzubringen. Vorzugsweise wird jedoch entsprechend der Darstellung in FIG 9 zunächst in einem Schritt S1 eine plane Spule gewickelt. Dies ist im Schritt S1 durch die Angabe "2D" angedeutet. Die plane Spule ist rein beispielhaft in FIG 10 dargestellt. Danach werden in einem Schritt S2 auf die plane Spule, also vor dem Verformen zur Formspule, die Schichten an Glimmerband 15 und Deckband 16 aufgebracht. Dies ist im Schritt S2 durch die Angabe "15, 16" angedeutet. Erst danach wird in einem Schritt S3 die bereits bewickelte flache Spule zur dreidimensionalen Formspule geformt. Dies ist im Schritt S3 durch die Angabe "3D" angedeutet.

Bei dem Formgebungsprozess (Schritt S3) verschieben sich die Schichten des Glimmerbandes 15 untereinander und/oder die Schichten des Deckbandes 16 gegeneinander. In manchen Fällen verschieben sich auch die an die äußerste Schicht des Glimmerbandes 15 angrenzende innerste Schicht des Deckbandes 16 gegeneinander. Die Verschiebungen sind ein sich durch den Herstellungsprozess ergebendes konstruktives Merkmal der Spulen 13.

Zusammengefasst betrifft die vorliegende Erfindung somit folgenden Sachverhalt:
Eine Spule 13 einer Statorwicklung 12 einer elektrischen Maschine 4 besteht aus einer Anzahl von Windungen 14, die gemeinsam mit einer Anzahl von Schichten eines Glimmerbandes 15 bewickelt sind, auf die wiederum eine Anzahl von Schichten eines Deckbandes 16 gewickelt ist. Das Deckband 16 weist eine Abfolge von zwei Schichten 17, 18 auf. Je eine dieser beiden Schichten 17, 18 ist ein Gewebe 17 und eine Folie 18. Das Gewebe 17 besteht aus einer Glasfaser oder aus einem ersten Hochleistungspolymer. Die Folie 18 besteht aus einem zweiten Hochleistungspolymer.

Die vorliegende Erfindung weist viele Vorteile auf. Insbesondere werden aufgrund der Ausgestaltung des Deckbandes 16 als Kombination eines Gewebes 17 und einer Folie 18 die Nässeresistenz und der Temperaturindex verbessert, ohne eine zusätzliche Schicht an Glimmerband 15 zu benötigen. Weiterhin wird auch der mechanische Schutz verbessert. Aufgrund der verwendeten Materialien lässt sich ferner eine Wärmeklasse von 200°C oder besser erreichen.

## Patentansprüche

1. Spule einer Statorwicklung (12) einer elektrischen Maschine (4),
- wobei die Spule aus einer Anzahl von Windungen (14) besteht, die gemeinsam mit einer Anzahl von Schichten eines Glimmerbandes (15) bewickelt sind, auf die wiederum eine Anzahl von Schichten eines Deckbandes (16) gewickelt ist,
- wobei das Deckband (16) eine Abfolge von zwei Schichten (17, 18) aufweist, wobei die eine dieser beiden Schichten (17, 18) ein Gewebe (17) und eine Folie (18) ist, wobei
- das Gewebe (17) aus einer Glasfaser oder aus einem ersten Hochleistungspolymer besteht und die Folie (18) aus einem zweiten Hochleistungspolymer besteht,
- das erste Hochleistungspolymer ein Aramid ist,
- das zweite Hochleistungspolymer ein Polyimid ist,
- das Gewebe (17) von den Schichten des Glimmerbandes (15) abgewandt ist und die Folie (18) den Schichten des Glimmerbandes (15) zugewandt ist, und
- die Spule als dreidimensionale Formspule ausgebildet ist, **dadurch gekennzeichnet, dass** die Schichten des Glimmerbandes (15) untereinander und die Schichten des Deckbandes (16) untereinander Verschiebungen gegeneinander aufweisen, wobei die Spule zunächst als plane Spule gewickelt wird, dann mit den Schichten des Glimmerbandes (15) und den Schichten des Deckbandes (16) bewickelt wird und erst danach zur dreidimensionalen Formspule geformt wird, so dass die Verschiebungen dadurch entstehen.

2. Elektrische Maschine, wobei die elektrische Maschine einen Stator (8) und einen Rotor (9) aufweist, wobei der Stator (8) Statornuten (11) aufweist, in die eine Statorwicklung (12) eingebracht ist, wobei die Statorwicklung (12) Spulen (13) aufweist, wobei mindestens eine der Spulen (13) als Spule nach Anspruch 1 ausgebildet ist.

3. Elektrischer Antrieb, wobei der elektrische Antrieb eine elektrische Maschine (4) nach Anspruch 2, einen Umrichter (5) und eine Steuereinrichtung (6) für den Umrichter (5) aufweist, wobei die elektrische Maschine (4) von der Steuereinrichtung (6) über den Umrichter (5) an eine Versorgungsspannung (U) anschaltbar ist, die größer als 1 kV ist, insbesondere größer als 1,5 kV, beispielsweise bis zu 4,5 kV.

4. Schienenfahrzeug, wobei das Schienenfahrzeug als Traktionsantrieb (2) einen elektrischen Antrieb nach Anspruch 3 aufweist.

## Claims

1. Coil of a stator winding (12) of an electric machine (4),
- wherein the coil consists of a number of windings (14), which are wound together with a number of layers of a mica strip (15), onto which, in turn, a number of layers of a cover strip (16) are wound,
- wherein the cover strip (16) has a sequence of two layers (17, 18), wherein these two layers (17, 18) are a woven fabric (17) and a film (18) in each case,
wherein
- the woven fabric (17) consists of a glass fibre or of a first high-performance polymer and the film (18) consists of a second high-performance polymer,
- the first high-performance polymer is an aramid,
- the second high performance polymer is a polyimide,
- the woven fabric (17) is facing away from the layers of the mica strip (15) and the film (18) is facing the layers of the mica strip (15), and
- the coil is embodied as a three-dimensional form-wound coil,
**characterised in that**
the layers of the mica strip (15) one below the other and the layers of the cover strip (16) one below the other exhibit displacements against each other, wherein
the coil is firstly wound as a flat coil, is then wound with the layers of the mica strip (15) and the layers of the cover strip (16) and is only then moulded to form the three-dimensional form-wound coil, so that the displacements occur as a result.

2. Electric machine, wherein the electric machine has a stator (8) and a rotor (9), wherein the stator (8) has stator slots (11), into which a stator winding (12) is introduced, wherein the stator winding (12) has coils (13), wherein at least one of the coils (3) is embodied as a coil according to claim 1.

3. Electric drive, wherein the electric drive has an electric machine (4) according to claim 2, a converter (5) and a control facility (6) for the converter (5), wherein the electric machine (4) can be connected by the control facility (6) by way of the converter (5) to a supply voltage (U) which is greater than 1 kV, in particular greater than 1.5 kV, for instance up to 4.5 kV.

4. Rail vehicle, wherein the rail vehicle has an electric drive according to claim 3 as a traction drive (2).

## Revendications

1. Bobine d'un enroulement (12) statorique d'une machine (4) électrique,
- dans laquelle la bobine est constituée d'un certain nombre de spires (14), qui sont enroulées ensemble avec un certain nombre de couches d'une bande (15) de mica, sur laquelle est enroulée à son tour un certain nombre de couches d'une bande (16) de recouvrement,
- dans laquelle la bande (16) de recouvrement a une succession de deux couches (17, 18), l'une de ces deux couches (17, 18) étant un tissu (17) et une feuille (18),
dans laquelle
- le tissu (17) est en une fibre de verre ou en un premier polymère de haute performance et la feuille (18) est en un deuxième polymère de haute performance,
- le premier polymère de haute performance est un aramide,
- le deuxième polymère de haute performance est un polyimide,
- le tissu (17) est à l'opposé des couches de la bande (15) de mica et la feuille (18) est tournée vers les couches de la bande (15) de mica, et
- la bobine est constituée sous la forme d'une bobine formée sur gabarit en trois dimensions,
**caractérisée en ce que**
les couches de la bande (15) de mica ont entre elles et les couches de la bande (16) de recouvrement ont entre elles des décalages, la bobine étant enroulée d'abord sous la forme d'une bobine plane, puis enroulée avec les couches de la bande (15) de mica et les couches de la bande (16) de recouvrement et seulement ensuite, formée en une bobine formée sur gabarit en trois dimensions de manière à créer les décalages.

2. Machine électrique, dans laquelle la machine électrique a un stator (8) et un rotor (9), dans laquelle le stator (8) a des encoches (11) de stator, dans lesquelles un enroulement (12) de stator est introduit, dans laquelle l'enroulement (12) de stator a des bobines (13), dans laquelle au moins l'une des bobines (13) est constituée sous la forme d'une bobine suivant la revendication 1.

3. Entraînement électrique, dans lequel l'entraînement électrique a une machine (4) électrique suivant la revendication 2, un onduleur (5) et un dispositif (6) de commande de l'onduleur (5), dans lequel il peut être appliqué à la machine (4) électrique par le dispositif (6) de commande par l'intermédiaire de l'onduleur (5) une tension (U) d'alimentation qui est plus haute que 1 kV, notamment plus haute que 1,5 kV, par exemple allant jusqu'à 4,5 kV.

4. Véhicule ferroviaire, dans lequel le véhicule ferroviaire a comme entraînement (2) de traction un entraînement électrique suivant la revendication 3.
